# EUROPÄISCHE PATENTANMELDUNG

(11) **EP 2 540 168 A2**
(43) Veröffentlichungstag der Anmeldung: **02.01.2013**
(21) Anmeldenummer: 12004576.0
(22) Anmeldetag: 18.06.2012
(51) Int. Cl.: A23K 1/00, A23K 1/16, A23K 1/175, A23K 1/18

(54) **Futtermittel**

(30) Priorität: 01.07.2011 DE 102011107854
(71) Anmelder: Alber, Stefanie, 69120 Heidelberg (DE)
(72) Erfinder: Alber, Stefanie, 69120 Heidelberg (DE)
(74) Vertreter: Lobemeier, Martin Landolf

(57) **Zusammenfassung**

Futtermittel mit einem die Palatabilität verstärkenden Geschinacksverstärker, dadurch gekennzeichnet, dass der Geschmacksverstärker 88-99 Gew.-% Kollagenhydrolysat und 1-12 Gew.% freies Hydroxyprolin aufweist.

## Beschreibung

Die Erfindung betrifft ein Futtermittel mit einem die Palatabilität verstärkenden Geschmacksverstärker.

Futtermittel sind in vielfältigen Zusammensetzungen, für unterschiedliche Zwecke und für eine Reihe von Tieren, insbesondere Haustieren bekannt. So unterscheiden sich z. B. üblicherweise die Zusammensetzungen von Futtermitteln für Jungtiere von Futtermitteln für ausgewachsene Individuen, die dem jeweiligen an die Wachstumsphase angepassten physiologischen Bedarf entsprechen. Daneben sind aber auch bestimmte Futtermjttelzusammensetzungen bekannt, die die Leistungsbereitschaft von Tieren, beispielsweise Pferden, steigern oder Rücksicht auf bestimmte Nahrungsmittenunverträglichkeiten nehmen sollen.

Letztendlich nimmt die Zusammensetzung eines Futtermittels wesentlichen Einfluss auf die Gesundheit der mit den Futtermitteln gefütterten Tiere, wobei der falsche Einsatz von Futtermitteln für die Tiere schädlich sein kann, einige richtig verwendete Futtermittel, auch als Nahrungsergänzungsmittel, aber insgesamt das Wohlbefinden der Tiere vorteilhaft verbessern oder sogar die Heilung von Krankheiten unterstützen können.

Nahezu allen Futtermitteln - ob es sich nun um Futtermittel für Fleisch- oder Pflanzenfresser (Camivora, Herbivora), z.B. Hunde (Canidae), Katzen (Felidae), Nager (Rodentia), Pferde (Equidae) oder Vögel (Aves), handelt - ist gemeinsam, dass diese von ihrer den Tieren vertrauten natürlich vorkommenden Darreichungsform, Zusammensetzung, Konsistenz etc. abweichen und daher nicht ohne weiteres von den Tieren akzeptiert werden. So betreiben die Hersteller von Futtermitteln, beispielsweise als Nass- oder Trockenfutter, einen hohen Aufwand, um die Schmackhaftigkeit (Palatabilität) der Futtermittel zu erhöhen und so letztlich eine sehr gute Futtermittelaufnahme zu erreichen.

Häufig werden hierfür als Futtermittelzusatzstoffe Geschmacksverstärker verwendet, die selbst keinen ausgeprägten Eigengeschmack aufweisen, aber dennoch zum Geschmack des Futtermittels derart beitragen, dass das Tier das Futtermittel (unterbewusst) als besonders schmackhaft wahrnimmt und daher auch gerne aufnimmt.

Nachteilig an der Verwendung von Geschmacksverstärkem ist jedoch, dass diese lediglich zur Verbesserung des Geschmacks beitragen, ansonsten aber keine (weitere) positiv wirkende physiologische Bedeutung haben. Die Verwendung von Geschmacksverstärkern erhöht daher den Arbeitsaufwand bei der Futtermittelherstellung lediglich zum Zweck der verbesserten Futtermittelaufnahme, wobei die Aufnahme hoher Mengen an Geschmacksverstärkem sich unter Umständen auch gesundheitsschädlich auswirken kann.

Aufgabe der Erfindung ist es daher, ein Futtermittel mit Zusatzstoffen zu schaffen, die eine hohe Palatabilität des Futtermittels bewirken und möglichst dabei selbst eine für die Gesundheit des Tieres förderliche physiologische Wirkung besitzen.

Diese Aufgabe wird durch das Futtermittel mit den in Anspruch 1 genannten Merkmalen gelöst. Die Unteransprüche geben vorteilhafte Ausgestaltungen der Erfindung wieder.

Überraschenderweise konnte beobachtet werden, dass eine einem Futtermittel beigemengte Zusammensetzung von 88-99 Gew.% Kollagenhydrolysat und 1-12 Gew.% freiem Hydroxyprolin mit einem Anteil am Futtermittel von wenigstens 0,001 Gew.-% eine den herkömmlichen Geschmacksverstärker vergleichbare Wirkung erzielt, also eine verbesserte Futtermittelaufnahme bewirkt. Dieser Effekt konnte bei Nassfuttermitteln, Trockenfuttermitteln, bei Milch und auch bei sogenannten "Saack & Treat" Produkten erzielt werden.

Speziell ist nach einer bevorzugten Ausgestaltung der Erfindung vorgesehen, dass das Futtermittel mit einer auf der Außenseite des Futtermittels beispielsweise durch Besprühen aufgebrachten, das Futtermittel bevorzugt vollständig umhüllenden Beschichtung zu versehen, die ein Kollagenhydrolysat und zusätzlich zu diesem freies Hydroxyprolin aufweist.

Das Futtermittel kann je nach Herstellungsverfahren aber auch "nur" eine teilweise bedeckende Beschichtung mit Geschmacksverstärker aufweisen.

Insbesondere besteht der Geschmacksverstärker bzw. die den Geschmacksverstärker aufweisende Beschichtung 88-99 Gew.-% Kollagenhydrolysat und 1-12 Gew.-% freies Hydroxyprolin, wobei das Kollagenhydrolysat aus Kollagen vom Typ I, II und/oder III hergestellt ist. Speziell weist das Kollagenhydrolysat ein Molekulargewicht von kleiner als 3,1 kD und einen Hydroxyprolingehalt von 11-12 % auf.

Bevorzugt beträgt das Gewicht des Geschmacksverstärkers 0,001 bis 5 % des Gesamtgewichts des Futtermittels (einschließlich Geschmacksverstärker). Besonders bevorzugt beträgt das Gewicht des Geschmacksverstärkers 0,1 bis 1 % des Gesamtgewichts des Futtermittels (einschließlich Geschmacksverstärker). Soll der positive Mobilitätseffekt /Knorpelaufbau des Geschmacksverstärkers im Vordergrund stehen, ist aber auch ein höherer Anteil von bis etwa 10 - 15 Gew.-% denkbar.

Bevorzugt weist die Beschichtung Spurenelemente und/oder Vitamine auf, besonders bevorzugt beispielsweise Zinkchelat und/oder Biotin.

Das Futtermittel kann klassisch als Nass- oder Trockenfuttemittel ausgebildet sein, wobei aber auch andere Futtermittelarten, z.B. Semi-Moist, Gel oder "Snack & Treat" Produkt, möglich sind.

Der Geschmacksversrärker wird dabei je nach Futtermittelart gemischt oder mit einem geeigneten Coating-Verfahren auf das Futtermittel aufgebracht Handelt es sich beispielsweise um Trockenfutterpellets kann das Aufbringen einer Beschichtung durch Besprühen der Pellets mit einer wässrige Kollagenhydrolysat und freies Hydroxyprolin enthaltenden Lösung erfolgen.

### Beispiel

Ein auf dem Markt erhältliches, für Hunde geeignetes fleischhaltiges "Snack & Treat" Produkt mit einer bereits hohen Palatibilität wurde mit einem erfindungsgemäß ausgestalteten "Snack & Treat" Produkt verglichen. Das erfindungsgemäße Futtermittel beinhaltete einen Geschmacksverstärker mit 88-99 Gew.% Kollagenhydrolysat (Molekulargewicht kleiner als 3,1 kD und Hydroxyprolingehalt von 11-12 %) und 1-12 Gew.-% freiem Hydroxyprolin, wobei der Anteil des Gesehmacksverstärkers am Gesamtfuttermittel zwischen 0,1 und 1 Gew.% betrug.

Das Trockenfuttermittel wurde einer Vielzahl von Hunden angeboten und das Fressverhalten durch deren Besitzer protokolliert.

Dabei gaben 66,7 % der Besitzer an, dass das Produkt nach der Erfindung dem Hund besser geschmeckt hat. Lediglich 23,3 % gaben an, dass kein Unterschied bei der Verrütterung der sich gegenüberstehenden Futtermittel festgestellt werden konnte. Nur 3,3 % fanden, dass das kommerziell erhältliche Futtermittel ohne erfindungsgemäßen Geschmacksverstärker bei der Verfütterung besser aufgenommen wurde.

In einem weiteren Experiment wurde das Futtermittel in insgesamt 150 Fütterungen mit und ohne erfindungsgemäßem Gcschmacksverstärker gleichzeitig angeboten. Dabei hatte der Hund also die Wahl zwischen dem Futtermittel mit dem erfindungsgemäßen Geschmacksverstärker und dem Futtermittel ohne erfindungsgemäßen Geschmacksverstärker.

In 74,7 % der Fälle wurde das erfindungsgemäß ausgebildete Futtermittel von den Versuchstieren zuerst gefressen. Lediglich 21,3 % der Tiere nahmen das Futtermittel ohne erfindungsgemäßen Geschmacksverstärker zuerst auf. Bei 4 % der Fütterungsexperimente zeigten die Versuchstiere überhaupt keinen Appetit.

Die Zahlen beider Experimente zeigen zwischen Hundehalter einerseits und Versuchstier andererseits übereinstimmende Ergebnisse mit einer eindeutigen Bevorzugung des erfindungsgemäßen Futtermittels.

Die aufgrund der Zusammensetzung aus 88-99 Gew.% Kollagenhydrolysat mit 1-12 Gew.-% freiem Hydroxyprolin verbesserte Palatabilität ermöglicht eine verbesserte Futteraufnahme der zu fütternden Tiere, wodurch nicht nur eine bessere Akzeptanz bereits bekannter Futtermittel erreicht werden kann, sondern auch (neue) Futtermittelzusammensetzungen mit guter Akzeptanz verfüttert werden können, die zwar eine für den tierischen Organismus förderliche Wirkung haben (z.B. als Nahrungsergänzungsmittel), sich aber ohne erfindungsgemäßen Geschmacksverstärker (z. B. als Beschichtung) überhaupt nicht oder nur schwer verfüttern lassen.

Dabei zeigt die Verwendung von Kollagenhydrolysat und freiem Hydroxyprolin nicht nur eine Verbesserung der Palatabilität des Futtermittels - die orale Einnahme von Kollagenhydrolysat fördert auch die Knorpelneubildung und wird akut bei Erkrankungen des Halte- und Bewegungsapparats, z.B. Arthrose oder Osteoporose, als therapeutische Maßnahme oder generell als prophylaktische Maßnahme gegen derartige Beschwerden empfohlen. So dient der erfindungsgemäße Geschmacksverstärker neben der Verbesserung der Futtermittelaufnahme selbst als Nahrungsergänzungsmittel.

## Patentansprüche

1. Futtermittel mit einem die Palatabilität verstärkenden Geschmacksverstärker,
**dadurch gekennzeichnet, dass**
der Geschmacksverstärker 88-99 Gew.-% Kollagenhydrolysat und 1-12 Gew.-% freies Hydroxyprolin aufweist.

2. Futtermitteln nach Anspruch 1, **dadurch gekennzeichnet, dass** der Geschmacksverstärker als eine das Futtermittel wenigstens teilweise bedeckende Beschichtung ausgebildet ist.

3. Futtermittel nach einem der vorhergehenden Ansprüche, **dadurch gekennzeichnet, dass** der Anteil des Geschmacksverstärkers am Futtermittel zwischen 0,001 Gew.-% und 1,0 Gew.% beträgt.

4. Futtermittel nach einem der vorhergehenden Ansprüche, **dadurch gekennzeichnet, dass** das Kollagenhydrolysat hergestellt ist aus Kollagen vom Typ I, II und/oder III.

5. Futtermittel nach einem der vorhergehenden Ansprüche, **dadurch gekennzeichnet, dass** das Kollagenhydrolysat ein Molekulargewicht von gleich oder kleiner als 3,1 kD aufweist.

6. Futtermittel nach einem der vorhergehenden Ansprüche, **dadurch gekennzeichnet, dass** das Kollagenhydzolysat eine Hydroxyprolingehalt von 11-12 % aufweist.

7. Futtermittel nach Anspruch 2, **dadurch gekennzeichnet, dass** die Beschichtung Spurenelemente und/oder Vitamine enthält.

8. Futtermittel nach Anspruch 7, **dadurch gekennzeichnet, dass** die Beschichtung Zinkchelat und/oder Biotin enthält.

9. Futtermittel nach einem der vorhergehenden Ansprüche, **dadurch gekennzeichnet, dass** das Futtermittel ein Trockenfuttermittel ist.

10. Futtermittel nach einem der vorhergehenden Ansprüche, **dadurch gekennzeichnet, dass** das Futtermittel ein Futtermittel für Tiere ausgewählt aus der Gruppe bestehend aus Hunde (Canidae), Katzen (Felidae), Nager (Rodentia), Pferde (Equidae) und Vögel (Aves) ist.
